# EUROPEAN PATENT SPECIFICATION

(11) **EP 1 800 315 B1**
(45) Date of publication and mention of the grant of the patent: **02.04.2008**
(21) Application number: 05772147.4
(22) Date of filing: 11.08.2005
(51) Int. Cl.: G21G 1/10, G21B 1/03

(54) **PROTON GENERATOR APPARATUS FOR ISOTOPE PRODUCTION**
PROTONENGENERATORVORRICHTUNG FÜR ISOTOPPRODUKTION
APPAREIL GENERATEUR DE PROTONS POUR LA PRODUCTION D'ISOTOPES

(30) Priority: 12.08.2004 EP 04019145
(43) Date of publication of application: 27.06.2007
(73) Proprietor: Sved, John, 27755 Delmenhorst (DE)
(72) Inventor: Sved, John, 27755 Delmenhorst (DE)
(74) Representative: Siekmann, Gunnar
(86) International application number: PCT/EP2005/008726
(87) International publication number: WO 2006/015864

(56) References cited:
- WO-A-03/019996
- US-A- 4 690 793
- US-A- 4 767 592
- US-A1- 2003 152 186
- US-B1- 6 593 539

## Description

### Field of the Invention

This invention relates an improvement to an electrostatic nuclear fusion reactor for neutron or proton and associated particle generation, and in particular though not exclusively to an elongated configuration polygonal cylindrically symmetric reactor that utilizes fusion reactions between low atomic number nuclei in a non-point like elongated collision zone where the improvement is configured for isotope production by proton reactions with appropriate atomic nuclei.

### Description of the Prior Art

### References Cited

| | | |
|---|---|---|
| Gu et al. | U.S. Pat. application 2003223528 | June 16, 1995 |
| Dai et al | PCT Application WO02101758 | June 11, 2001 |
| Sved | PCT Application WO03019996 GB20010020280 | Aug 21, 2001 |
| Jurczyk et al. | U.S. Pat. 6,922,455 | Jan 28, 2002 |
| Leung et al | U.S. Pat. application No. 20220150193 | Mar. 18, 2002 |
| Leung et al | U.S. Pat. application No. 20220130543 | Mar. 18, 2002 |
| Leung et al | U.S. Pat. application No. 20220130542 | Mar. 18, 2002 |
| Witberg | SE19980003302 | Sept. 29, 1999 |
| Kiselev | U.S. Pat. application No. 20030194039 | Oct. 16, 2003 |

### Background of the Invention

Nuclear fusion grade collisions of low atomic number nuclei have been utilized to produce particles such as neutrons, protons and various fragments of the nuclei that constitute the fused product. The means of colliding the atomic nuclei have utilized particle accelerators, laser photon pressure and heating for inertial confinement fusion, magnetic plasma confinement fields to confine hot plasma and electrostatic confinement fields to focus ions into a collision zone.

Typical examples of such fusion reactions include:
a) ₁D² + ₁D² -->₂He³ (0.82 MeV) +₀n¹ (2.45 MeV)
b) ₁D²+₁D²-->₁T³ (1.01 MeV)+₁p¹(3.02 MeV)
c) ₁D²+₁T³-->₂He⁴ (3.5 MeV)+₀n¹(14.1 MeV)
d) ₁D²+₂He³-->₂He⁴ (3.6 Mev)+₁p¹(14.7 Mev)
e) ₂He³+₂He³-->₂He⁴+2₁p¹+ 12.86MeV

The present invention is concerned with reactions d) and e) which yield energetic protons. In order to understand the present application it is useful to review the prior art that is usually applied to neutron generation. Replacement of the gas mixtures required for reactions a), b) and c) by the gas mixture for reaction d) or e) will enable the respective reactions to predominate for proton production. Reaction d) is of particular interest for the present improvement.

The co-pending disclosure Sved WO03019996 has been conceived as a new technology that addresses the cost problems associated with ²⁵²Cf and the short life of so called sealed tube neutron generators. The elimination or mitigation of solid target erosion is an attractive possibility of the Inertial Electrostatic Confinement IEC concept. The constant renewal of the colliding nuclei within the fusion target zone is a further attraction for producing a constant neutron or proton yield.

The present invention is intended to be applied as the core sub-system of a compact system for the production of certain isotopes that are used by the medical or non-biological tomographic scanning process commonly called P.E.T. Scanning. This Positron Emission Tomography utilizes the pair of 511 keV gamma photons arising from positron (positive charge electrons or antimatter electrons) decay of certain radioactive or non stable isotopes where the annihilation of the positron and an electron converts the rest mass (i.e. 2MₑC²) generally to two gamma ray photons that are emitted with exactly opposite velocity vectors. The gamma detecting sensors are typically arranged in a ring through which the patient or object to be scanned is passed. Given sufficient quantity and time the detected 511 keV emissions can be mapped to build up a tomographic or three dimensional data field that may be presented as visual slices or three dimensional models of the scanned object or patient's internal body structure.

The choice of isotope that may be used for P.E.T. Scans is determined by the biomedical considerations which are too complex for a useful discussion here. The commonly listed P.E.T. Isotopes, their half lives and their generation reactions are:

| | | |
|---|---|---|
| ¹⁴N + p => ¹¹C + α | ¹¹C | 20.4 minutes half life |
| ¹³C + p => ¹³N + n | ¹³N | 10 minutes |
| ¹⁶O + p => ¹³N + α as ¹³H₃ | ¹³N | 10 minutes |
| ¹⁵N + p => ¹⁵O + n | ¹⁵O | 2 minutes |
| ¹⁸O + p =>¹⁸F + n | ¹⁸F | 110 minutes |

The conventional way of producing these isotopes is to have the source isotope enriched in a target medium such as a water based solution. Indeed the oxygen isotope can be the oxygen in the water molecule. The target solution is bombarded by a stream of energetic protons with an energy sufficient to allow penetration of a barrier wall and still have enough residual energy for the required proton nucleus interaction that leads to the formation of the desired isotope. The wall thickness is typically that of a metallic foil.

The source of protons is a particle accelerator of the cyclotron or linear accelerator type. The imparted proton energy is greater than 5 MeV. Some linear accelerators are offered with 12 MeV of proton energy. The proton beam intensity is several milliampere of current with a focal point characteristic dimension of several millimetre diameter. This constitutes a rather hot spot. An engineering issue faced by designers of this type of PET isotope production system is the intense thermal energy produced in the target medium. This can include superheating of the water which requires pressurization to keep the water in liquid form for most efficient proton-nucleus collisions. Therefore it is obvious that the accelerator based systems are relatively complex in the target sub-system. Indeed the target system requires regular maintenance for foil wall renewal and servicing of the associated vacuum seals while preserving the vacuum of the accelerator system. Witberg SE19980003302 offers quick change fittings for use with conventional accelerator targets. The quality of the water must also be carefully monitored as contamination of the superheated fluid is a problem. Lai et al (WO0210175) teaches about means to ensure best quality of the water used for PET isotope production with cyclotrons. The accelerator itself is demanding of maintenance and highly trained operators. The adaptation of the classic sealed tube neutron generator to function as a proton (Hydrogen) accelerator does not work because the kinetic energy imparted would be quite insufficient.

The indicative costs of an accelerator based P.E.T. Isotope production facility are a procurement cost of approximately 2 million Euro and an annual running cost of 2 million Euro. Therefore the market penetration of these systems has been in the order of 2 units within a city of approximately 3 million population. Recent papers indicate that intense laser induced PET isotope production is also being developed. However a practical system at an economic price is still not a certainty. The P.E.T. Scanning system is regarded as mature market consisting of two major manufacturers with well known brand names. However they are frustrated by the limitation imposed by present isotope production means.

The present improvement invention therefore offers an intrinsically lower manufacturing cost with a longer interval between servicing of the combined proton generator and target sub-system. The thermal flux imposed per unit area or unit volume of the target may be much lower because a proton beam is not utilized and the proton flux is evenly distributed over the entire internal surface area of the reactor chamber wall. This further reduces the complexity and cost associated with the cooling sub-system.

### DETAILED DESCRIPTION OF THE PRIOR ART

Prior art neutron generator devices are listed in Sved WO03019996. These are described with focus on the differences from a linear geometry long life plasma-gas target line source topology neutron generating device. None of this prior art teaches about the present disclosure. Most of the prior art devices are strictly intended for neutron generation.

The axial cylindrical IEC (as disclosed, for example, in Gu et al. U.S.Pat. Application 2003223528) is purported to be a precursor for a portable, line source neutronor proton generator. Neutrons are produced throughout the single beam which lies along the long axis of the device. US Pat. Application 2003223528 is silent on how the device may be reduced to practice for practical proton utilization. However problems persist with this device as a candidate for practical applications and in particular as a cost-effective approach for line source neutron or proton generation. The device will have at least three high voltage, vacuum feed through assemblies that penetrate the vacuum vessel wall at right angles to the central axis of the cylinder. Further high voltage, vacuum feed through assemblies are required at each end of the cylindrical vessel. A newer embodiment built for basic experimentation has been published. It has eliminated some of the vacuum chamber wall penetrations by mounting some hollow electrodes on the outside of a glass vacuum vessel. Such a configuration would fail to operate if applied to the present disclosed which relies on metallic components that would nullify the electrostatic field applied externally.

US patent applications filed from March 2001 through October 2001 by Leung et al U.S. Patent application No. 20220130543 Mar. 18, 2002 Cylindrical Neutron Generator with Nested Option and U.S. Patent application No. 20220130542 Mar. 18, 2002 Spherical Neutron Generator) are concerned with various configurations of neutron generators. The fusion reactor of these patent claims are different from the Sved ( GB20010020280 ) patent application and indeed are not generically related to the Inertial Electrostatic Confinement type of device. The Cylindrical Neutron Generator with Nested Option has a central Anode and the fusion collisions are intended to occur within a solid target that lines the inside wall of the cylindrical reaction chamber vessel. The nesting of such a device would either impose great complexity in comparison the the present invention or it would simply block a substantial fraction of the produced fusion protons.

Jurczyk et al. U.S. Patent Application 20030152186 U.S. Pat. 6,922,455 Jan 28, 2002 disclose a variation of the Sved, Patent Application WO03019996 where a cylindrical configuration with a central cathode of gridded structure is surrounded by additional biased electrodes of cylindrical and substantially solid form with regularly spaced holes. For the present invention the existence of such layers of electrodes is a certain nullifier of the desired effect which is the passage of fusion protons to the inside wall of the reactor vessel with minimal loss of energy before or via transit through the inner wall.

P.E.T. Isotope production experiments using a large (approximately 1 m diameter) spherical IEC device has been reported by Kulcinski et al at the University of Wisconsin. Their tests have shown the viability of the method and indicate that the level of proton generation needed is greater than approximately 10¹¹ protons per second.

Kiselev U.S. Pat. application No. 20030194039, Oct. 16, 2003 describes a design improvement of cyclotron accelerator targets for the production of ¹⁸F. It is silent in regard to the present invention.

### SUMMARY OF THE INVENTION

Embodiments of the present invention seek to provide apparatus for proton or neutron generating producing fusion reactions with little or no maintenance to an internally mounted conduit structure for aqueous fluids between the substantial vacuum vessel wall and the inner facing wall which of generally thin foil thickness.

Embodiments of the present invention seek to provide apparatus for producing nuclear fusion reaction rates with high stability as defined by a measurable neutron or proton flux at conditions of specified voltage and current of continuous or pulsed character.

Embodiments of the present invention seek to provide apparatus for producing nuclear fusion reaction rates of high reproducibility in mass produced embodiments.

Embodiments of the present invention seek to provide apparatus for producing nuclear fusion reactions with a minimum or reduced amount of peripheral support equipment functions.

Embodiments of the present invention seek to provide apparatus for neutron or proton producing nuclear fusion reactions that is structurally robust for operation in hospital locations in static or movable systems.

Embodiments of the present invention seek to provide apparatus for containing nuclear fusion reactions to produce protons and other reaction products which are contained within the reactor vessel wall and a relatively small flux of neutrons that can escape from a sealed apparatus in all directions from a zone of origin that is elongated.

Embodiments of the present invention seek to replace a multi millimeter diameter intense mono directional beam of accelerated energetic protons made by a nuclear particle accelerator apparatus which impinge on a target causing relatively rapid damage.

Embodiments of the present invention seek to provide apparatus for proton or neutron generating producing nuclear fusion reactions in an elongated zone or multiple zone segments in the case of a cluster of linear geometry reactor vessels which are functionally interlinked.

Embodiments of the present invention seek to provide apparatus for producing nuclear fusion reactions in a volume centred on a centreline axis or line of even number polygonal cylindrical symmetry of a reactor vessel.

Embodiments of the present invention seek to provide apparatus that utilises pulsed power input whereby the electrical current is in the order of several to tens of amperes during the pulse thereby exploiting an observed fusion rate enhancement characteristic of super linear proportionality with the applied current.

According to a first aspect of the present invention, there is provided a particle producing apparatus adapted to utilize a star mode of inertial electrostatic confinement of a glow discharge induced ion and neutral gas mixture of fusible low atomic number isotope species to generate neutrons as the principal useful product and, in the case of the present improvement, to generate protons the apparatus comprising a vessel of generally prismatic form having an inner surface and a central axis, within which vessel is disposed an elongate anode electrode structure surrounding an elongate cathode electrode structure having a perimetral surface provided with apertures therein, the anode and cathode structures being substantially concentric along at least a part of their lengths and substantially coaxial with the vessel such that, during operation, the star mode beams of ions and high kinetic energy neutrals have a general direction of motion which is aligned substantially radially to a central axis of the vessel.

According to a second aspect of the present invention, there is provided a particle producing apparatus adapted to utilize a star mode of inertial electrostatic confinement of a glow discharge induced ion and neutral gas mixture of fusible low atomic number isotope species to generate neutrons, the apparatus comprising a vessel of generally prismatic form and having an inner surface and a central axis, within which vessel is disposed a substantially coaxially located reticulated or cage-like cathode electrode structure supported on a high voltage vacuum feed through at one end thereof and by an insulating support structure at another end thereof such that, during operation, the star mode beams of ions and high kinetic energy neutrals have a general direction of motion which is aligned substantially radially to a central axis of the vessel.

Preferably, the apparatus is adapted to generate 14 MeV protons in a "macro" linear or curvilinear geometry, where the expression "macro" is used to distinguish between a relatively small "micro" sized neutron source geometry such as a single pellet of radioactive isotope or the target zone of a proton beam from a particle accelerator machine and a "mega" sized neutron source such as a fission reactor core or a star. In other words, "macro" implies a size or scale that is useful for industrial applications. This may range from approximately 1cm line source length for envisaged medical neutron beam source applications to several metres for a land mine search or soil analysis application. The macro characteristic also implies that the macro scale device may be built from an ordered collection of micro sized units. This is the case in certain embodiments of the prior invention which efficiently stack micro star beam cells into a linear arrangement which may consist of two or more cells, typically several to tens of cells. In the present invention the macro scale mitigates the intensity and damage of the proton flux and deposited heat but utilises most of the produced protons.

The vessel and/or cage-like cathode structure having a generally prismatic form may have a generally tubular form, and may have a substantially circular cross-section, a substantially elliptical cross-section, a substantially polygonal cross-section with substantially straight sides or convex or concave sides or any other appropriate cross-section such as compound curves or combinations of straight, convex and/or concave. The cross-sections of the vessel and the cathode structure may be similar to or different from each other.

Advantageously, the cathode structure has open faces on its circumference and is encircled by an anode and vessel wall structure. The cathode structure may comprise a plurality of cathodes stacked prism end to prism end with generally identical electrode set structures to establish an elongated array that in star mode operation will establish a stable plasma gas dynamic structure within whose star mode beams of generally radially oscillating ions there will occur a high probability of nuclear fusion reactions whose escaping neutrons will appear to an external observer with suitable neutron detecting instrumemtation to originate from a zone defined by an internal volume space of the anode electrode and the inner surface or wall of the vessel. In the present improvement the protons behave similarly but do not escape from the reactor vessel.

The cathode grid electrode may be constructed from sheet or plate metal of suitable metallurgical characteristics and be as thin as practicable for structural robustness. In a compound cathode structure formed from a plurality of cathodes stacked end-to-end, a single cell may be defined by two generally circular disks of diameter D1 which are separated by a set of spacers with length L1. Preferably, the spacers divide a circumference of the cathode structure into an even number of substantially equally dimensioned holes or windows through which the star mode beams will be substantially centrally aligned when the apparatus is operating in the star mode.

The holes or windows of the cathode grid in conjunction with the anode wall may serve to determine planes of equal electrostatic potential. A lens effect may be produced with the superposition of a charge space of the ions and electrons when the apparatus is operating in the star mode. An electrostatic lens shape can be altered by changing the anode and the cathode geometries, for example by incorporating:
a) Substantially concentric circles for the cathode and anode.
b) A regular even number of sides of polygonal form for the anode inside wall and a corresponding number of windows on the cathode with the circumference of the window sides being generally:
   1. convex
   2. flat
   3. concave
   4. compound combinations of the above three
   and each with radii of curvature and lengths of circular arc segments defined for repeated usage throughout a stack of cathode grid cells so that the star beams that are formed will be optimized or suited for secondary electron production at the anode and mitigation of ion collision with the cathode grid electrode.

In the present embodiment the anode wall is constructed so as to provide a conduit for fluids. It is therefore characterized by an inner wall which serves as the electrical anode for the reactor. The sides of the conduit that are not directly exposed to the cathode have a structural function. The inner wall has a function that is central to the intended function of the present improvement.

The anode wall may be treated by passive means to promote production of multiple emissions of relatively low energy electrons that will most easily ionize reactant gas species isotopes when a surface of the anode wall is hit by a relatively high energy electron that has been accelerated by an applied electrostatic field that is present during star mode glow discharge ionization operation. Such passive means may include coating a substrate metal with rare earth elements or other elements with beneficial properties and/or by imposing a surface finish that has a texture or micro geometry to promote generation of secondary electrons.

The apparatus may be adapted such that ions born or generated within a zone of acceptance between the anode wall and the perimeter of the cathode grid will be drawn into the star mode beam around which the zone of acceptance is substanitally centred and which has cathode hole window side segment curvatures which are suited to a shape of planes of equipotential in the electrostatic field to increase a size of the zone of acceptance and thereby capture most or substantially all ions produced by interactions of neutrals with secondary electrons near the anode wall.

A failure mode of any metal coating of insulating surfaces may be mitigated by providing for a generally radial trajectory of both ionized and neutral particles of gas atoms, molecules and metallic particles so that migration of metal atoms towards either end of the electrode stack where non-electrically conductive electrode support structures are located is prevented or at least reduced.

Advantageously, the reactor vessel is hermetically sealed and a pressure regulation device is incorporated within the sealed vessel. An appropriate pressure regulation device is a conditioned chemical getter pump of appropriate characteristics that may be installed so that upon heating it will cause loaded isotopes of hydrogen to diffuse out and reach an equilibrium partial pressure in the sealed and previously out-gassed and evacuated vessel chamber corresponding to a getter material pressure and a diffusion loaded density of hydrogen isotopes in said getter material.

The chemical getter pump may be configured effectively to capture contaminant chemical species other than noble gases which may include residue from a vessel chamber cleaning process plus species releases from surfaces because of the conditions of normal star mode operation. The getter pump may therefore enhance consistency of a fusion rate by continuously collecting contaminants that would otherwise rob energy from the star mode plasma-gas structure.

Alternatively, the vessel is not hermetically sealed, in which case auxiliary vacuum pumping and gas dosage equipment will need to be provided. This equipment will generally be more expensive than the getter pump described above.

In the present embodiment for the utilization of Helium-3 mandates that an external means of storing, regulating Helium-3 and eventual Helium-4 partial presssure and recovery of the expensive gas be incorporated in addition to a getter pump for the Deuterium gas.

The anode and vessel walls may comprise a combined functional element and may incorporate external fins or other heat transfer structures or surfaces for heat transfer by means of flow of a heat transfer fluid, generally a cooling fluid, over the fins or other structures or surfaces.

In the present embodiment the fluid conduit function of the anode wall has the consequence that thermal energy will be imparted to the fluid as well as to the wall structure.

The anode, secondary electron production means, vessel wall and external heat transfer fins or the like may be integrated into a cross-sectional form that is suited for manufacture by an extrusion process, especially an aluminium extrusion process, in order to manufacture a reduced cost component of the apparatus.

In the present embodiment the vessel wall consists of extruded slots which can accommodate and retain the anode wall fluid conduit structure.

In the present embodiment the vessel wall the inner wall is lined with a conduit structure which is composed of a welded fabrication because an extrusion with the required wall thickness is not readily available.

In the present embodiment the fluid conduit structure is fabricated from a milled steel back plate, which has a cross section profile that is compatible with the extruded slots on the inside of the substantial vessel wall, and a thin sheet that is pressed or otherwise formed into a wave profile anode wall, the two components being welded together to achieve an ultra high vacuum compatible seal.

In an embodiment of the present invention the fluid conduit anode wall structure has a relatively thin anode wall with a characteristic thickness that may range between 0.05 mm to 0.5mm. This thickness is dictated by the reduction of kinetic energy of the 14.7 MeV protons that is permissible in order that the residual energy range is sufficient for nuclear interactions with certain isotopes that shall be concentrated within the fluid and it also applies to the length of traverse path for protons which traverse through the anode wall at other than a 90 degrees angle of incidence.

In an embodiment of the present invention the thin anode wall of the conduit structure be achieved by well know techniques such as chemical etching and protective masking such that structural stiffener features and relatively thin windows can be defined and produced on the anode wall of the conduit structure if deemed necessary.

In an embodiment of the present invention the thin anode wall of the conduit structure may have a complex chemically etched structure where stiffener features are aligned with the cathode grid cells in order to better resist the thermal stresses imposed by the impingement of the star mode beams.

The materials from which the vessel wall, the cathode structure and/or the anode structure are made may have a significant effect on the performance of embodiments of the present improvement of the invention. It has been found that aluminium is a good material, since it may be extruded to form complex compound structures and is a good source of relatively low energy secondary electrons when bombarded with relatively high energy electrons accelerated from the cathode towards the anode and the vessel wall. In a particularly preferred embodiment, the vessel wall may be made of aluminium provided with an inner coating or surface texture that enhances secondary electron emission. Alternatively or in addition, an inner coating or liner made of stainless steel has been found to be suitable. In a particularly preferred embodiment, the vessel wall is made of aluminium alloy in order to utilize the relatively high thermal conductivity and electron emission characteristics of this material. Other options which are considered to be practical for milling from solid form or for welded fabrication include stainless steel and copper.

Advantageously, at least the vessel wall and optionally the anode structure are formed from or coated with a material, generally a metallic material that acts as a good source of secondary electrons as defined above. Suitable coating materials include metals able to withstand high temperatures, such as molybdenum, tungsten and suitable rare earth elements.

The inner surface of the vessel may be roughened or formed with discontinuities, including grooves or channels, that promote generation of secondary electrons. This can enhance an electron multiplier or cascade effect that can generate more ions in the vessel and thus improve fusion rates.

It is important to appreciate that embodiments of the present invention do not require longitudinal transparency along the axis of the cathode structure, and that solid bulkheads and the like may be provided. This is because particle acceleration is generally radial relative to the axis of the cathode structure as opposed to parallel relative thereto as is the case in much of the prior art:

It is also believed that a diametric symmetry of the apertures in the perimetral surface of the cathode structure is important for efficient operation of embodiments of the present invention.

A particular advantage of embodiments of the present invention is that neutron or proton output can be made extremely consistent, which means that performance can be reliably predicted.

Embodiments of the present invention functioning as a generator are well-suited for arranging Beryllium or Lead to be formed into the slot-in anode wall structures whereby the generated neutrons or protons will have nuclear interaction with these elements or others similarly incorporated into the reactor chamber wall so as to generate further nuclear particles such as neutrons.

Embodiments of the present invention functioning as a proton generator are well-suited for production of radioactive isotopes that are used in Positron Emission Tomography. This is because the Deuterium and Helium-3 fusion reaction releases a proton with an energy of 14.7 MeV. Proton energies in the range of 8 to 18 MeV have been found by various researchers to be necessary for reaction with Oxygen-16 to produce Nitrogen-13 which is a P.E.T. Isotope. The passage of a proton through a membrane or foil made of Aluminium causes a reduction of the kinetic energy of the proton. A proton of a given energy will penetrate approximately 1.5 times deeper in Aluminium than in Steel. Practically with 14.7 MeV protons the Aluminium anode wall thickness needs to be less than approximately 0.3 mm in order to have an exit proton energy of 8 MeV. An even thinner anode wall thickness will raise the residual proton energy available for the intended interaction with the target isotope nuclei. If an engineering assessment leads to the choice of stainless steel due to its more favourable properties for fabrication, the typical wall thickness with be in the range of 0.05 - 0.5 mm with a preferred value of 0.1 mm.

An embodiment of the present invention has a fluid target that is water H₂O with ¹⁶O and via the (p, alpha) reaction. The newly formed ¹³N isotope atom combines with Hydrogen to form ammonia NH₃ which can be extracted by chemical means. Other proton reactions are possible with certain isotopes of C, N, O and F as well as P to produce P.E.T. applicable isotopes.

Embodiments of the present invention incorporate a means of circulating the target fluid through the conduit structure of the anode wall component such that the necessary cooling of the fluid, anode wall and associated reactor vessel structure can be implemented as well as delivering newly formed product isotope bearing compounds to an external location where a chemical means of extraction and concentration can be located within a closed recirculation circuit.

P.E.T. scanning facilities have had to be located in very close proximity to devices such as proton accelerators which produce energetic protons. The present improvement provides an energetic proton source and target irradiation device which has the potential to have significantly lower manufacturing and operating cost with a performance that can support patient P.E.T. scanning protocols. The essential sub-systems have the functions of fusion reactor vessel, compact high voltage pulsed power supply, reactant gas pressure regulation and storage, target fluid circulation, cooling and product isotope bearing compound chemical extraction and quality assurance measurement.

Embodiments of the present invention provide a high utilization of the available isotropic proton flux which is quite different from the collimated proton beams that are produced by the conventional proton accelerator machines so far used for P.E.T. isotope production. In such beam-target configurations the protons impinge a metallic foil window at right angles. In the present invention the isotropic protons impinge on the anode wall at all angles between 0 degrees (right angle to the local simple cylindrical surface) to approximately 70 degrees.

Unlike a vessel lining that may be constructed from small bore thin walled metallic tubing which is tightly packed one tube next to another, either aligned parallel to the primary axis or spiralling in a screw thread arrangement, with a consequential loss of capture area or volume caused by the wall thickness of the tubes, which may typically occupy approximately 40%, the present invention extruded anode wall fluid conduit structure can present a more usable window area and target fluid volume.

Embodiments of the present invention will have a stainless steel anode wall thickness that shall allow low angle of incidence protons to traverse with an apparent path length through the aluminium anode wall of 0.1 mm or less. Thus for example a shallow impingement angle to the local surface of 70 degrees will have a traverse path length of wall thickness x tan 70° so that a wall thickness of 0.05 mm will give a traverse path length of about 0.14 mm, which would be acceptable.

Embodiments of the present invention will have the anode wall fluid conduit structure manufactured from a bespoke fabrication of milled stainless steel backplane and pressed sheet, the openings of which can be sealed with a plug-like component which also incorporates stub fluid line connections. The consequential pipe terminations of each anode wall fluid conduit module can be attached to a manifold component which forms a segment of the reactor chamber vacuum vessel wall at one or both ends. Such attachments can be commercially available gas line fittings. This manifold component can deliver the fluid inward and outward flow lines while maintaining vacuum integrity.

The present invention utilizes the nuclear fusion potential of plasma gas interactions that have been observed to occur in spherical radial and cylindrical axial inertial electrostatic confinement (IEC) type devices which rely on a simple glow discharge for initial ion production. Embodiments of the present invention provide a novel stacked electrode configuration that results in a macro linear geometry neutron source. Embodiments of the present invention may satisfy industrial requirements for a neutron or proton generator that has a lifetime measured in years and constant reproducible neutron output performance.

The present embodiment combines the linear geometry IEC type device with a proton irradiation target that is also characteristically linear. In accordance with the broader aspects of this improvement of the invention, there is provided an apparatus (sometimes referred to as a fusor or inertial electrostatic confinement) comprising a cathode and anode electrode set for generating fusion reactions that occur mostly within a set of enhanced ion density planar radial beams that are defined by an electrode set electrostatic potential field and a space charge of a gas and plasma mix. A series of generally cylindrical form cage cathode electrodes may be mounted end to end so as to form a straight linear or curvilinear stack along a common centreline axis. Each cathode electrode cell may have an open grid circular circumference that is permeable to gas and plasma particle flow and closed or solid circular end faces. The open grid circumference may be defined by equally spaced longitudinal structural elements of wire or vanes that connect the cylinder ends and establish diametrically opposed hole pairs. The number of longitudinal vanes may be set to make the holes approximately square or rectangular in form and also to retain a geometric radial transparency greater than approximately 85%. The linear stack of cylindrical cathode grid electrodes is contained within a cylindrical or polygonal anode structure that may also serve as a vacuum vessel wall. The generally cylindrical and coaxial cross section of this cathode and anode structure may be distorted from circular such that the star mode spokes or beams will have different lengths. The macro form of the linear source of neutrons as viewed from a distance of about five times the characteristic vacuum vessel or anode diameter may be a non-resolved summation of many mini fusion zones that are produced in each micro-channel star beam. These beams may be established along diametric paths that are the longest and through the cathode grid hole pairs that are the largest. Therefore symmetry and uniformity are advantageous when seeking to increase the number of mini fusion zones. However, asymmetric configurations may be established by design if needed for specific neutron or proton source geometry and neutron collimator configurations. Means are provided for applying a many tens of kilovolt potential to the cathode and anode for establishing an electrostatic field between them. Initial ionization may be provided by the glow discharge mechanism of neutral gas ionization. Thereafter, several methods of secondary electron production known to one skilled in the art may be employed to enhance the production of ions. For completeness, the utilization of radio frequency excitation to ionization is mentioned as a means that is well known for producing plasmas.

The gas generally consists of fusible isotopes at a low pressure suitable for glow discharge to be induced. The low pressure is compatible with a chemical non-evaporative getter pump that may have the characteristic of producing a constant partial pressure of hydrogen isotope for a constant temperature of the getter material. The getter pump may serve as a gas storage and pressure regulator in a hermetically closed chamber and is useful in a practical industrial embodiment of the invention. The getter temperature may be controlled by automated means to maintain a target voltage across the electrodes as determined by a gas-plasma pressure. The partial pressure of Helium 3 is controlled by a closed loop controller of a micro dosage valve in combination with the Deuterium getter pump. Depending on the fusion rate of consumption and product gas production, occasional purge cycles may be devised. The high voltage power supply preferably has pulsed current regulation means that may be employed to establish near-constant electrical average power input to the IEC device. This yields a corresponding stable fusion rate and isotope production rate. Pulsed operation with pulse duration of 20 micro seconds is considered optimal for mitigation of local hot spots on the cathode that may act as sources for arcs and consequential severe local heating. Longevity of the reactor chamber assembly may be provided through the avoidance of completely metal-coated internal insulator surfaces. This relies on utilization of micro-channel beam distribution to mitigate metal vapour migration to ceramic feedthrough and stand-off insulator surfaces. The dimensions of the cathode may be such that radiant heat is effectively transferred to the anode chamber wall and then further transferred to the external cooling means via the circulating fluid in the conduit. This ensures that the operating temperature of the cathode grid remains low enough to effectively mitigate significant metal vapour pressure.

A fusion collision zone generally occupies both a spatial region within a central grid cathode electrode with high radial transparency and external to it within the hermetically sealed reactor vessel. The central electrode and auxiliary ionization enhancement devices may be configured to define an approximate cylindrically symmetric electrostatic field for the maintenance of a stable neutral gas and ionized plasma mixture. At the gas pressure required for glow discharge when the high voltage is applied, the cathode grid may induce electrostatic lenses that effectively mitigate higher energy ion impact with the cathode. The high energy ions collide mostly with neutral gas to yield nuclear fusion reactions along the star beam like trajectories diametrically through the cathode grid holes with little or virtually no erosion of the electrode or other internal components. Stacking the cylindrical cathode grid sections end to end permits a complete plasma gas target length to be defined as multiples of the cathode grid cell sections. A neutron emission zone will normally not be resolved to distinguish the individual star segments and the individual radial star beams. The mechanical robustness, lack of delicate or limited operational endurance components, very slow erosion electrode, self contained gas pressure and contaminant management getter pump device and reduced need for external support sub-systems provide cost effective long operational life for industrial applications. In the present embodiment for the improvement some external means of storing and regulating Helium-3 gas will be an external sub-system that is necessary due to the inability of the getter pump to absorb Helium which is an inert or nobel gas element. In addition to providing a single straight line source of protons or neutrons, embodiments of the present invention may be provided as a densely packed cluster of externally cylindrical or prismatic cross-section vessels with a target fluid circulation circuit.

### BRIEF DESCRIPTION OF THE DRAWINGS

For a better understanding of the present invention and to show how it may be carried into effect, reference shall now be made by way of example to the accompanying drawings, in which:
FIGURE 1 shows a schematic of a aluminium extrusion profile for the vessel wall with integrated cooling fins, anode wall fluid conduit with ionization enhancement geometry for high secondary electron emission in the preferred embodiment of the present improvement;
FIGURE 2 shows a schematic of the preferred embodiment of the present invention integrated proton production line source reaction chamber and fluid target conduit wall inserts with fluid flow manifolds at each end for connection to external system functions ; and
FIGURE 3 shows a schematic of a P.E.T. isotope production system which utilizes the preferred embodiment of the present invention.
FIGURE 4 shows a schematic of the preferred embodiment of the present invention integrated proton production line source reaction chamber where a rearrangement of the high voltage features allows the interconnection of a series of chambers.
FIGURE 5 shows an illustration of how individual reaction chambers may be clustered.

### DETAILED DESCRIPTION OF THE PREFERRED EMBODIMENTS

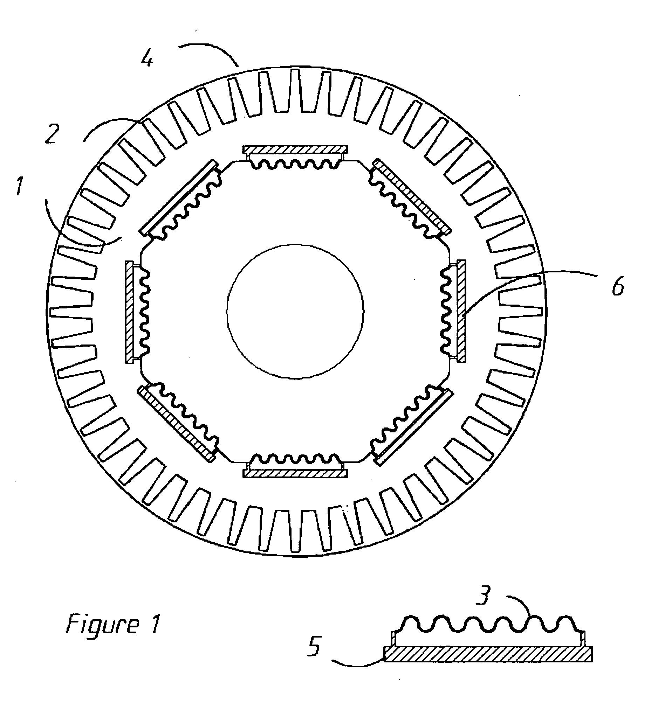

FIG. 1 illustrates an integrated vessel. The wall and heat transfer component **1** provides the advantage of reduced manufacturing cost. The component is produced as an extrusion of aluminium alloy by well known means. The combined function fluid or gas conduit and anode wall is fabricated from stainless steel or material of similar properties to achieve manufacturability and function. The preferred vessel topology is an eight sided polygonal form. The exterior has integrated cooling fins **2** that are sized to fit within a cylindrical housing **4.** The housing **4** serves as a cowling or duct for a coolant fluid (such as air) so that heat transfer from the fins **2** to the fluid flowing past can be facilitated. It is feasible to use a liquid coolant for transfer of greater heat flux. It is also feasible to use liquid coolant such as water circulated in a tubing system that is brazed to the vessel wall **1.**

The detailed insert view of FIG 1 shows for illustrative purposes the cross-section of one of the inserted fluid conduit and anode wall components **5** which locate on surface of the inside wall of the vessel **1**. As discussed in WO03019996 there are well known phenomena that can be exploited in order to increase the production of low energy electrons. The ionization of the reactant gas species provides a high intensity flux of UV photons which will meet the vessel wall **1.** The incidence of high energy electrons which have been accelerated by the intense electrostatic field of the present invention will cause the emission of secondary electrons of low energy. These low energy electrons are well suited for ionization of hydrogen and Helium. The population of ions near the anode **1** will be greatly increased. To ensure an increase of the low angle of incidence of the high energy electrons that stream toward the anode in the local radial direction, the surface is shaped as shown with corrugations **3.** The height of the peaks must be low in order to keep them within the electrostatic field potential zone where the greatest ionization efficiency can be achieved. The width of the ridges **3** must also be low in order to fit as many as possible into the available area. The design considerations will be influenced by the cost of manufacture. If the vessel wall **1** and anode structure **6** is based on a cylindrical tube section, it is also acceptable to make the ionization enhancement ridges **3** as a screw thread or spiral tube on the inside wall surface. These will run in a circumferential direction rather than a longitudinal direction as in the case of an extruded form.

The corrugated anode wall **3** has a thickness determined by the energy loss of the energetic protons which is permissible to ensure that the residual energy is optimal for interaction of the protons with the designated target nuclei which are incorporated in the molecules of the fluid or the solute molecules contained within the conduit 5. This wall thickness is in the range of 0.01 to 0.5 mm.

The conduit anode wall **5** is manufactured by a fabrication of a stainless steel back plate and stainless steel corrugated front wall. The back plate is machined or milled which produces typical wall thickness of at least 2 mm. The anode wall **3** is processed by means of well known techniques to roll or press the desired corrugation of the desired wall thickness within a tolerance range. Such a process provides design options by means of selective reinforcing strips to counteract deformation due to the operational pressure difference. The two components may be welded together when the materials are compatible for electron beam, laser or other intensely focused energy welding technique in order to form the anode wall fluid conduit sub-assembly **6.** In the embodiment shown in FIG 1 such sub-assemblies can be slid into position in the vessel wall **1.**

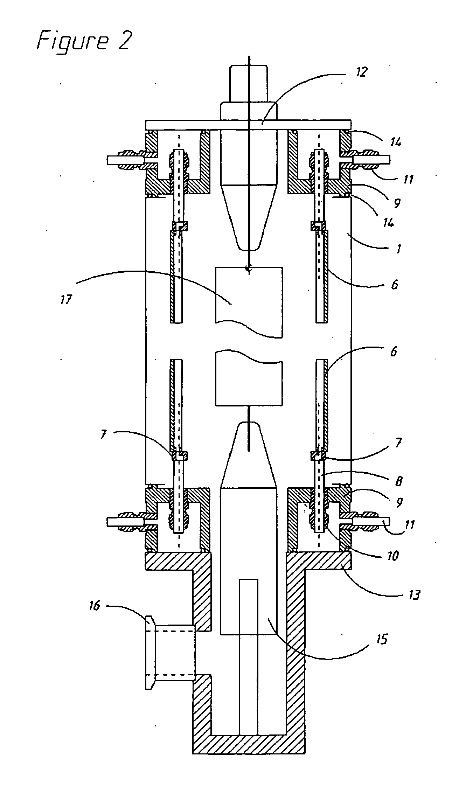

FIG 2 illustrates a complete reaction chamber and integrated fluid conduit sub-system assembly of the embodiment of the present invention. The length has been diagrammatically cut so that the ends of the reaction chamber may appear on one page. The overall length will be in the range 1 - 2 metre. The vessel wall **1** holds 8 anode wall fluid conduit assemblies **6,** two of which are shown in cross-section. The central cathode assembly **17** is shown symbolically. The internal features at each end are milled away to provide better access and accommodation of the fluid conduit assemblies. Each fluid conduit has a termination assembly which consists of a termination block **7** and a stub tube **8** which are brazed or otherwise attached so as to achieve a leak free or ultra high vacuum standard seal. The stub tubes **8** are inserted into manifold assemblies **9** at each end of the chamber **1.** The ultra high vacuum seal connection of each stub tube is achieved by means of appropriate pipe fittings **10** which are of a welded fitting type that can be welded to the stainless steel manifold **9.**

Inlets and outlets **11** are similarly implemented by means of welded tube joint fittings **10.**

The manifolds **9** are closed by the end cap assemblies **13.** The high voltage feed through end cap assembly **12** provides an ultra high vacuum seal and the gas feed end cap assembly **13** also provides an ultra high vacuum seal. The seal gasket **14** is a "metal O-ring" device. An array of clamping screws is provided which work against flanges, which are not shown, to clamp the flange faces against the "metal O-ring" seal to achieve a specified deformation and ultra high vacuum seal.

The gas feed end cap assembly **13** is connected to a gas management sub-system which may be implemented as separate gas pressure regulators for each reactant gas type or as a combination of gas pressure regulator for-Helium-3 and getter pump for Deuterium. The gas feed end cap assembly **13** encloses a high voltage stand-off component **15** which permits the free movement of gas between the main chamber and the gas port **16.**

It is apparent to one experienced in the art that a circular or polygonal reaction chamber may also be so altered as to produce a wide chamber where the fluid conduits **6** are arranged in two parallel planes with any practical width determined by the number of fluid conduits **6** to be accommodated side by side, projecting out of the plane of FIG 2. However such a configuration would suffer from a reduction in the proton capture area of the fluid conduits **6.**

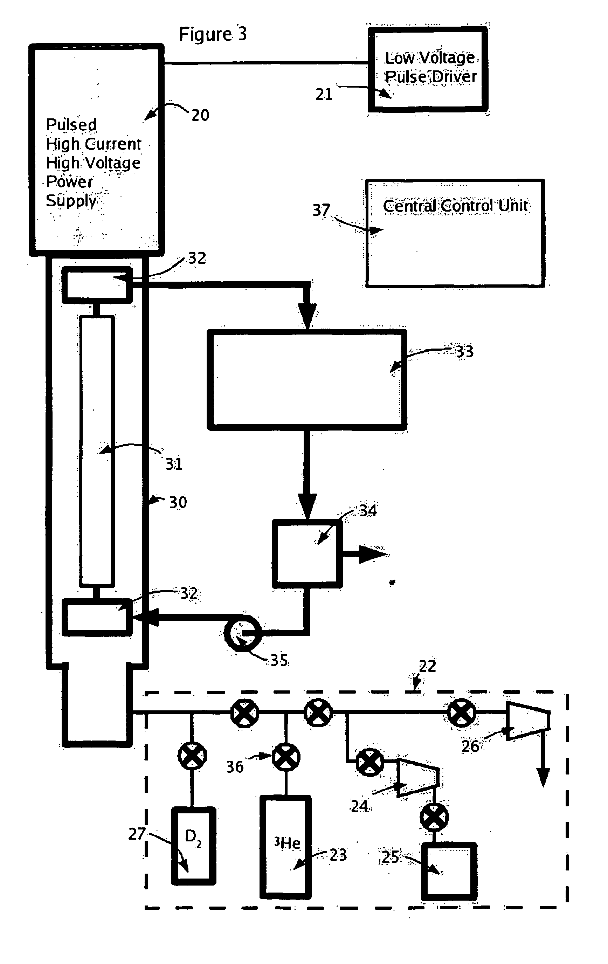

FIG 3 illustrates a system function schematic. Embodiments of the present invention require the peripheral functions to be interfaced therewith for effective operation. The most important peripheral is a very high voltage pulsed current power supply which typically consists of a high voltage transformer section **20** and a lower voltage pulse driver section **21.**

The getter pump assembly **27.** This may be located external to the reaction chamber assembly of FIG. 3 in a manifold assembly show symbolically within boundary line **22.** The non-evaporative getter pump is supported by a power supply, heating element and a temperature measurement circuit (not shown). The power supply provides voltage and current that is sufficient to power a heater element that is embedded within the getter pump getter material. The heater raises the getter material to a temperature in the range of 400°C to 600°C. The heater is controlled so that the getter material remains at a steady temperature. The vessel **30** must be sealed and evacuated after it has been correctly baked out to eliminate residual volatile substances such as water. A conditioned getter of the appropriate material will release hydrogen or isotopes thereof so that a partial pressure will rise to the level of 5 x 10⁻³ mbar to 5 x 10⁻¹ mbar when it is in the above mentioned temperature range. At a particular steady temperature the partial pressure will also be steady. The getter pump at constant temperature serves as a pressure source and a pressure regulator of high precision. It has been observed that very minor pressure fluctuations can cause significant departures of the star mode glow discharge voltage. The regulation of pressure can be fine enough with open bleed valve and turbo molecular vacuum pump configurations but the getter pump provides a superior means of pressurization of the sealed configuration IEC device.

The capacity of the getter pump **27** to store the reactant gas (Deuterium) is a factor in determining the maximum number of operation hours of a sealed reactor chamber. A practical configuration allows ten years of continuous consumption of D₂ at the rate of 10⁸ fusions per second. During such a period, the output of the sealed reactor can be expected to change very slowly as the mixture ratio of reactants changes. In the D-He3 embodiment, some DD fusion reactions will occur. Tritium and Helium-3 will be generated as well as protons (Hydrogen). The Helium-3 and Tritium will either be accumulated or consumed in the applicable fusion reaction. The contribution of these side reactions will in fact be minimal. The fusion rate in the present embodiment is likely to be 10¹⁰ per second or more. It is feasible to perform maintenance on a sealed chamber by opening the fill and vent port (not shown), extracting the gas by heating the getter pump and baking the chamber to induce outgassing of the embedded volatile species in the inner wall surfaces **3** and **1** of FIG 1. The handling of Tritium is subject to safety regulations. However the amounts of Tritium that will accumulate in a well used D-He3 reactor embodying the present invention are calculated to be below the lowest safety threshold for handling and transport in most countries. The gas management manifold subsystem **22** also includes a reservoir of Helium-3 in a pressure vessel **23.** When a servicing operation is to be implemented the reaction chamber is evacuated to the minimum practical pressure level. The high cost of Helium-3 will mandate a scavenging system where a turbo molecular vacuum pump **24** directs residual Helium-3 which may be at an initial partial pressure of 1-5 x 10⁻² mbar into a reservoir **25** for re-use.

The entire gas manifold sub-system relies on a primary vacuum pump **26** for initial evacuation and support of subsequent operation procedures. Numerous dosage valves and shut-off valves (shown generically) may be included to support an automated configuration control implementation.

The preferred embodiment for isotope production has a chamber assembly **30** within which an inner or anode wall is lined with fluid conduit assemblies **31** of which there are 8 in the preferred embodiment. These are connected to manifold assemblies **32** at each end so as to ensure that the contained aqueous fluid is hermetically sealed from the vacuum like environment of the reaction chamber. The manifold assemblies are equipped with ports to enable a fluid flow circuit to be configured. The fluid flow circuit includes the main functional features of a heat exchanger **33** to remove a substantial fraction of the heat delivered to the chamber by the high voltage power supply. A further functional feature in the fluid circuit is the means to extract the P.E.T. Isotope **34.** For example there can be an ion exchange resin which can separate or filter out the ¹³NH₃ which results from the ¹⁶O(p,α)¹³N reaction. The fluid flow circuit is completed by a pump **35.** All components will have to be of medical equipment standard.

For the purposes of the present embodiment, it is sufficient to say that there is software which controls the glow discharge voltage, pulse current and pulse duty cycle that the high voltage power supply **20, 21** must deliver. The voltage is determined by the gas pressure in the chamber **30.** The gas pressure is determined by the getter pump temperature which is measured and sent to the software by a temperature measurement circuit. Getter pump temperature determines Deuterium partial pressure. The software commands the getter pump heater power supply to deliver more or less power in order to maintain the getter pump temperature. The software also commands a dosage servo valve control unit to maintain a pressure. This software function controls the partial pressure of Deuterium determined by the Getter Pump **27** and the Helium-3 dosage valve **36** so that the mixture ratio of the two gaseous elements is equal in terms of number of atoms. Command or control signals are issued to the necessary sub-systems so that the reactor operates at or very near to the parameters required for the optimum production of isotopes. The control algorithm is not trivial due to several non linear characteristics; however, the response time is sufficiently long that a typical computer or dedicated microprocessor control computer **37** with the necessary input and output ports can easily cope with the cyclic monitor and control tasks. The net result is that steady proton production rates are achieved.

A further feature of a medical embodiment of the present invention system is the capability to automate all processes and ensure high reliability, redundancy and safety standards. The ancillary equipment illustrated in FIG 3 is monitored and controlled by the Central Control Unit **37** control computer system. Such a system will have a man machine interface so that qualified operators can oversee and give high level commands to the PET isotope producer system. The automation technology Central Control Unit **37** may ultimately be driven by a software program that oversees the safety interlocks, start-up and shut-down sequence, normal steady state operating parameters and management of minor and major anomalies. The specification of such a software program and its modular algorithms is beyond the scope of the present disclosure. However it is noted that the applicant in respect of the present application has already developed such monitoring and control software which is now a mature peripheral sub-system for the present invention. The operator can also input certain control parameters and command the proton generator system to start the warm-up mode, start the proton generation mode, stop or go to stand-by from the proton generation mode, resume the proton generation mode, and finally initiate total shut-down of the system. The control of the fluid circulation sub-system will also be controllable but usually it will be automated in order to support the reaction chamber cooling function. There will be a sub-set of functions associated with the isotope filter **34** operation.

Example of preferred embodiment characteristic dimensions:

| | |
|---|---|
| Inside diameter of the anode and vessel wall | 8cm |
| Diameter of the cathode grid electrode | 3 cm |
| Length of the cathode grid electrode | 80cm |
| Length of the proton line source | 80cm |
| Overall length of the reactor chamber | |
| and power supply assembly | 180cm |

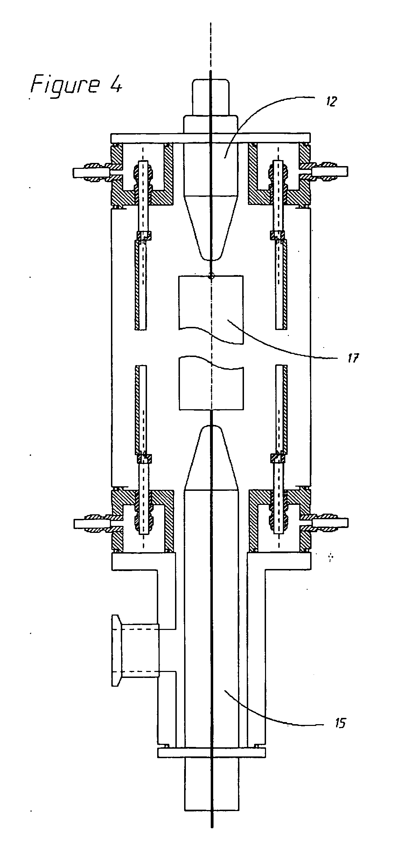

A cluster of reaction chambers may be envisaged whereby the gas manifold sub-system **22** may be extended to serve all reaction chambers in the cluster. Similarly one or more high voltage power supplies may be utilised as can one or more fluid circulation circuits and isotope removal units. One high voltage power supply of appropriate pulsed power specification may be used instead of a cluster or smaller power supplies. This is likely to achieve economies of scale. In this case the high voltage power is delivered to all the reaction chambers by a serial connection of each chamber to the high voltage power supply whereby the increased electrical load to the high voltage power supply is manifest as an increased parallel load. All the reaction chambers except the unit at the farthest end of the serial chain are each terminated with a high voltage vacuum feed through assembly **12, 15** at both ends as illustrated in FIG 4. Generally the clustered reaction chambers would be configured so that the entire P.E.T. Isotope production unit would occupy the floor space used by a hospital bed in order to have mobility and compatibility with the typical medical environment. The reactor chamber cluster would be surrounded by shielding in order to achieve external ionizing radiation levels below the regulated minima.

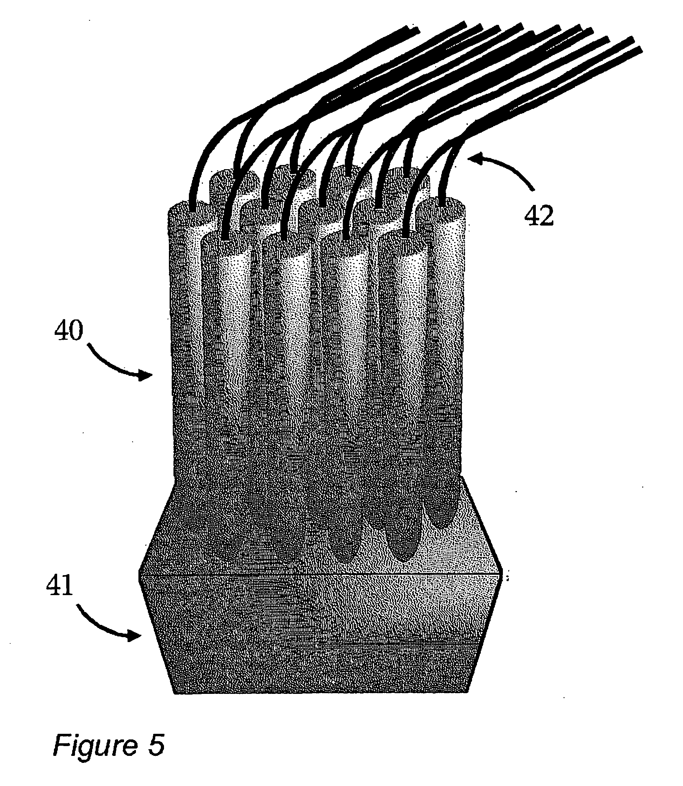

FIG 5 illustrates how the clustered reaction chambers **40** may be configured. The base structure **41** supports the vacuum manifold and fluid circulation system equipment. The high voltage cable **42** for each reaction chamber is connected to the High Voltage power supply sub-system.

Other embodiments of the linear geometry may be envisaged in order to suit specific applications. It will be apparent that the broad teachings of the present invention can be profitably applied to specific embodiments and applications far beyond what is set forth above for the purposes of illustration. While the invention has been shown and described with reference to certain embodiments thereof, it will be understood by those skilled in the art that various changes in form and detail may be made therein without departing from the scope of the invention as defined by the appended claims.

The preferred features of the invention are applicable to all aspects of the invention and may be used in any possible combination.

Throughout the description and claims of this specification, the words "comprise" and "contain" and variations of the words, for example "comprising" and "comprises", mean "including but not limited to", and are not intended to (and do not) exclude other components, integers, moieties, additives or steps.

## Claims

1. A particle producing apparatus (4) adapted to principally utilize a star mode of inertial electrostatic confinement of a glow discharge induced ion and neutral gas mixture of fusible low atomic number isotope species to generate neutrons, or protons or both, the apparatus comprising a vessel (1) of generally prismatic form having an inner surface and a central axis, within which vessel (1) is disposed an elongate anode electrode structure (6) surrounding an elongate cathode electrode structure (17) having a perimetral surface provided with apertures therein, the anode and cathode structures being substantially concentric along at least a part of their lengths and substantially coaxial with the vessel (1) such that, during operation, the star mode beams of ions and high kinetic energy neutrals have a general direction of motion which is aligned substantially radially to a central axis of the vessel, **characterized in that** the internal wall surface of the anode structure (6) is lined with substantially planar fluid conducting structures (3) which cover the prismatic inner wall faces (5) and which have an inner wall profile similar of the prismatic inner wall faces and thus provide a high fraction of exposure to the available flux of particles in a small as possible volume of the vessel (1).

2. An apparatus as claimed in claim 1, wherein that reactant gas isotopic mixture is selected to be one where the predominant reaction products includes protons.

3. An apparatus as claimed in claim 1, wherein the inner wall of the fluid conducting structure is composed of a metal alloy produced with a thickness small enough to permit the protons emitted by the aforementioned nuclear fusion reactions to pass through with an average kinetic energy loss of approximately fifty percent or less.

4. An apparatus as claimed in claim 1, wherein the inner wall of the fluid conducting structure functions as the anode and has corrugations parallel to its long axis which serve to stiffen the thin inner wall and provide enhanced secondary electron emission.

5. An apparatus as claimed in claim 1, wherein the outer wall of the fluid conducting structure functions as a heat conductor and structural interface to the vessel wall via a sliding fit profile.

6. An apparatus as claimed in claim 1, wherein the fluid conducting structures are connected to a manifold at each end whereby the manifold serves to distribute and collect the fluid at the input and output ends respectively.

7. An apparatus as claimed in claim 1, wherein the fluid conducting structures and manifolds form part of a fluid circulation loop which includes heat exchangers, pump and a means to extract compounds in solution which have been formed as a consequence of the transmutation of isotopes which have been subject to nuclear reactions with the aforementioned protons that enter the fluid.

8. An apparatus as claimed in any one of the claims 1, wherein the reaction chamber assembly may be clustered with replicated units and the high voltage power is delivered to all the reaction chambers by a connection of each chamber to the high voltage power supply whereby the increased electrical load to the high voltage power supply is manifest as an increased parallel load.

9. An apparatus as claimed in claim 1, wherein all the reaction chambers except the unit at the farthest end of the serial chain are each terminated with a high voltage vacuum feed through assembly at both ends.

## Patentansprüche

1. Teilchenerzeugende Vorrichtung (4), die angepasst ist, um hauptsächlich einen Sternmodus eines elektrostatischen Trägheitseinschlusses eines durch Glimmentladung induzierten Gasgemisches aus Ionen und neutralen Teilchen von verschmelzbaren Isotopenarten mit niedriger Kernladungszahl zu verwenden, um Neutronen oder Protonen oder Beides zu erzeugen, wobei die Vorrichtung einen Behälter (1) von einer im Allgemeinen prismatischen Form umfasst, der eine innere Fläche und eine mittige Achse aufweist, wobei innerhalb des Behälters (1) eine längliche Anodenelektrodenstruktur (6) angeordnet ist, die eine längliche Kathodenelektrodenstruktur (17) umgibt, die eine umkreisende Fläche mit darin bereitgestellten Öffnungen aufweist, wobei die Anoden- und Kathodenstrukturen entlang mindestens eines Teils ihrer Längen im Wesentlichen konzentrisch und im Wesentlichen koaxial mit dem Behälter (1) sind, derart, dass während des Betriebs die sternförmigen Strahlen von lonen und neutralen Teilchen mit hoher kinetischer Energie eine allgemeine Bewegungsrichtung aufweisen, die im Wesentlichen radial zu einer mittigen Achse des Behälters ausgerichtet ist, **dadurch gekennzeichnet, dass** die innere Wandfläche der Anodenstruktur (6) mit im Wesentlichen ebenen fluidleitenden Strukturen (3) ausgekleidet ist, welche die prismatischen inneren Wandflächen (5) bedecken und welche ein inneres Wandprofil aufweisen, das dem der prismatischen, inneren Wandflächen ähnlich ist und **dadurch** einen hohen Anteil an Kontakt zu dem vorhandenen Teilchenfluss in einem kleinstmöglichen Volumen des Behälters (1) bereitstellt.

2. Vorrichtung nach Anspruch 1, wobei das isotopische Gemisch der gasförmigen Reaktionspartner ausgewählt ist, ein solches zu sein, bei dem die vorwiegenden Reaktionsprodukte Protonen aufweisen.

3. Vorrichtung nach Anspruch 1, wobei die innere Wand der fluidleitenden Struktur aus einer Metalllegierung besteht, die mit einer Dicke hergestellt ist, die klein genug ist, um den durch die vorangehend erwähnte Kemfusionsreaktion emittierten Protonen zu erlauben, mit einem durchschnittlichen kinetischen Energieverlust von ungefähr fünfzig Prozent oder weniger durchzutreten.

4. Vorrichtung nach Anspruch 1, wobei die innere Wand der fluidleitenden Struktur als die Anode wirkt und parallel zu ihrer Längsachse Sicken aufweist, um die innere Wand zu versteifen und eine verbesserte zusätzliche Elektronenemission bereitzustellen.

5. Vorrichtung nach Anspruch 1, wobei die äußere Wand der fluidleitenden Struktur als ein Wärmeleiter und über ein Gleitsitzprofil als strukturelle Schnittstelle zu dem Behälter wirkt.

6. Vorrichtung nach Anspruch 1, wobei die fluidleitenden Strukturen an jedem Ende mit einem Verteiler verbunden sind, wobei der Verteiler dazu dient, das Fluid an den Einlass- beziehungsweise Auslassenden zu verteilen und zu sammeln.

7. Vorrichtung nach Anspruch 1, wobei die fluidleitenden Strukturen und Verteiler Teil eines Fluidkreislaufes bilden, der Wärmetauscher, Pumpen und Mittel zum Extrahieren von gelösten Verbindungen, die als Folge der Umwandlung von Isotopen gebildet wurden, die Kernreaktionen mit den vorangehend erwähnten Protonen, die in das Fluid eintreten, ausgesetzt waren, umfassen.

8. Vorrichtung nach Anspruche 1, wobei die Reaktionskammer-Baugruppe dicht bestückt mit sich wiederholenden Einheiten sein kann und die Hochspannung allen Reaktionskammern durch eine Verbindung von jeder Kammer zu der Hochspannungsversorgung zugeführt wird, wobei die erhöhte elektrische Ladung zu der Hochspannungsversorgung sich als eine erhöhte parallele Ladung ausdrückt.

9. Vorrichtung nach Anspruch 1, wobei alle Reaktionskammern außer der Einheit am entferntesten Ende der fortlaufenden Kette mit einer Hochspannungsvakuumzuführung durch Zusammenbau an beiden Enden abgeschlossen sind.

## Revendications

1. Appareil produisant des particules (4), utilisant un modèle en étoile d'un confinement inertiel électrostatique d'un mélange d'ions et de gaz neutre induit par une décharge luminescente, à isotopes fusibles en nombre atomique faible, pour générer des neutrons ou des protons ou les deux, l'appareil comprenant une cuve (1), généralement de forme prismatique, possédant une face intérieure et un axe central, cuve (1) dans laquelle est disposée une structure d'électrode anode allongée (6) entourant une structure d'électrode cathode allongée (17) qui possède une surface périphérique pourvue d'ouvertures, les structures d'anode et de cathode étant essentiellement concentriques le long d'au moins une partie de leurs longueurs et essentiellement coaxiales par rapport à la cuve (1), de telle sorte que pendant le fonctionnement, les faisceaux d'ions en étoile et les neutres à énergie hautement cinétique se déplacent dans une direction générale qui est alignée essentiellement radialement avec un axe central de la cuve, **caractérisé en ce que** la surface de paroi interne de la structure d'anode (6) est garnie de structures (3) conductrices de fluide, essentiellement plates, qui couvrent les surfaces de paroi internes prismatiques (5) et qui possèdent un profil de paroi interne semblable à celui des surfaces de paroi internes prismatiques et qui fournissent donc une fraction d'exposition élevée au flux de particules disponible dans un volume de cuve (1) aussi petit que possible.

2. Appareil selon la revendication 1, dans lequel le mélange réactif de gaz isotopique est sélectionné pour être un mélange dans lequel les produits de réaction prédominants comprennent des protons.

3. Appareil selon la revendication 1, dans lequel la paroi interne de la structure conductrice de fluide est composée d'un alliage de métaux réalisé avec une épaisseur suffisamment petite pour permettre aux protons émis par les réactions de fusion nucléaire mentionnées ci-dessus de passer à travers avec une perte moyenne d'énergie cinétique d'environ cinquante pour cent ou moins.

4. Appareil selon la revendication 1, dans lequel la paroi interne de la structure conductrice de fluide fonctionne comme l'anode et possède des corrugations parallèlement à son axe longitudinal, qui servent à rigidifier la paroi interne et produisent une meilleure émission secondaire d'électrons.

5. Appareil selon la revendication 1, dans lequel la paroi externe de la structure conductrice de fluide fonctionne comme un conducteur thermique et comme une interface structurelle par rapport à la paroi de cuve au moyen d'un profil d'ajustement coulissant.

6. Appareil selon la revendication 1, dans lequel les structures conductrices de fluide sont reliées à un collecteur à chaque extrémité, le collecteur servant à distribuer et à collecter respectivement le fluide aux extrémités d'entrée et de sortie.

7. Appareil selon la revendication 1, dans lequel les structures conductrices de fluide et les collecteurs font partie d'une boucle de circulation de fluide comprenant des échangeurs thermiques, une pompe et un moyen d'extraction des composants dans la solution, qui ont été formés suite à la transmutation des isotopes ayant été soumis aux réactions nucléaires avec les protons mentionnés ci-dessus qui pénètrent le fluide.

8. Appareil selon la revendication 1, dans lequel l'assemblage de la chambre de réaction peut être groupé avec des unités reproduites, et la puissance à haute tension est fournie à toutes les chambres de pression en reliant chacune des chambres à l'alimentation en puissance à haute tension, en conséquence de quoi la charge électrique accrue de l'alimentation en puissance à haute tension apparaît comme une charge parallèle accrue.

9. Appareil selon la revendication 1, dans lequel toutes les chambres de réaction, mis à part l'unité située à l'extrémité la plus éloignée de la chaîne en série, se terminent aux deux extrémités par un passage à vide de haute tension à travers l'assemblage.
